# EUROPEAN PATENT APPLICATION

(11) **EP 4 768 340 A1**
(43) Date of publication of application: **01.07.2026**
(21) Application number: 25227394.1
(22) Date of filing: 29.12.2025
(51) Int. Cl.: B60R 1/24

(54) **METHOD AND SYSTEM FOR A TRANSPARENT HOOD OF A VEHICLE**

(30) Priority: 27.12.2024 US 202463739440 P; 24.12.2025 US 202519432863
(71) Applicant: Harman Becker Automotive Systems, Inc., Novi, MI 48377 (US)
(72) Inventor: VENKATASUBRAMANYA, Yeshvanth Narahari, South Lyon, MI, 48178 (US); SANFTMANN, Harald, 85386 Eching (DE); LOEHL, Pascal, Chicago, IL, 60611 (US); LYON, David Gillet, Detroit, MI, 48208 (US)
(74) Representative: Kraus & Lederer PartGmbB

(57) **Abstract**

A method is disclosed for a controller of a vehicle, for continuously acquiring images from a forward-facing camera (117, 118) of portions of a front environment of the vehicle that are obstructed by the hood of the vehicle, and continuously projecting the generated images onto screens (204a-204d) integrated within a windshield of the vehicle. The forward-facing camera (117, 118) may be positioned behind the windshield and above a line of sight of the operator, granting the camera increased visibility over the front environment of the vehicle. Each image of a video feed of the camera is processed to perform three-dimensional (3D) scene reconstruction, using depth estimation combined with mesh generation. At each of the screens (204a, 204d), a view of an image acquired by the camera is generated in a respective driver's eye point of view with appropriate model view and projection matrices.

## Description

### FIELD

The present disclosure relates to a system and a method for displaying output from a camera onto a windshield of a vehicle.

### BACKGROUND

A hood of a vehicle conceals a portion of the road from an operator of a vehicle. As such, the operator may not be able to anticipate and achieve driving maneuvers based on the concealed portion of the road. For example, the hood of the vehicle may conceal a ball kicked in front of the vehicle during operation of the vehicle. Accordingly, the operator of the vehicle may not be able to anticipate driving maneuvers that enable the vehicle to maneuver around the ball to prevent an interaction between the ball and the vehicle and to achieve such a driving maneuver. The hood of a vehicle hinders driving performance of an operator due to not being able to anticipate appropriate driving maneuvers based on driving events that occur on the portion of the road concealed by the hood.

### SUMMARY

In various embodiments, the issues described above may be addressed by a method for a controller of a vehicle, the method comprising receiving an image acquired from a forward-facing camera of the vehicle of a portion of a front environment of the vehicle that is obscured from an operator of the vehicle by a hood of the vehicle; performing a three-dimensional (3D) scene reconstruction of the portion of the front environment, based on the received image; and displaying one or more adjusted images of the 3D scene reconstruction at one or more respective reflective screens positioned in a cabin of the vehicle; wherein the displayed adjusted images are translated from a first point of view of the forward-facing camera to a second point of view of the operator.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIG. 1 is a schematic diagram of an exemplary vehicle including one or more cameras;
FIG. 2 shows an exemplary view of a windshield of the vehicle from a perspective of a driver operating the vehicle;
FIG. 3 is a diagram showing an exemplary system for generating images for portions of road concealed by a hood of the vehicle;
FIG. 4A is an image showing an exemplary street view of a portion of road in front of the vehicle;
FIG. 4B is a side view of the vehicle showing a blind spot in the portion of road in front of the vehicle;
FIG. 4C is an image showing the exemplary street view from a perspective of the driver through the windshield, where images of the portion of the road in front of the vehicle are displayed in reflective screens below the windshield;
FIG. 5 shows a method for generating images for portions of road concealed by the hood of the vehicle based on images received from a forward-facing camera;
FIG. 6 shows a method for generating a depth map based on images received from the forward-facing camera; and
FIG. 7 is a diagram illustrating how depth map values of the depth map are generated.

### DETAILED DESCRIPTION

The following description relates to systems and methods for increasing a visibility of a driver operating a vehicle of portions of a front environment of the vehicle that are concealed or obstructed by a hood of the vehicle. Specifically, a method is disclosed for continuously generating images received from a forward-facing camera of the portions of the road obstructed by the hood of a vehicle, and continuously projecting the generated images onto screens integrated within or positioned adjacent to a windshield of a vehicle.

The forward-facing camera may be an augmented reality (AR) camera positioned behind the windshield (e.g., within a cabin of the vehicle) and above a line of sight of the operator, granting the camera increased visibility over portions of the front environment of the vehicle. The forward-facing camera continuously obtains a video feed during operation of the vehicle. Each image of the video feed is processed to perform three-dimensional (3D) scene reconstruction based on red-green-blue (RGB) values from the received image. The 3D scene reconstruction may be performed using depth estimation combined with mesh generation. Each vertex in forward-facing camera coordinates is multiplied by a corresponding estimated depth value to generate a 3D mesh to enable texture mapping of the received image. For each of a plurality of reflective screens integrated within the windshield, a view of the received image is generated in a respective driver's eye point of view with appropriate model view and projection matrices.

By transforming captured images from the forward-facing camera to an appropriate point of view for each reflective screen, the system creates the illusion that the hood of the vehicle is transparent. The continuous projection of images onto the reflective screens creates a real-time transparent hood effect, enabling the operator to anticipate and achieve driving maneuvers based on the previously concealed portion of the road. For example, the operator may be able to see and avoid a pothole, an object fallen onto the road, parking barriers, traffic cones, etc. positioned close to the front of the vehicle. By enabling the operator to see the portion of the road concealed by the hood, a safety of the operator and passengers of the vehicle may be increased.

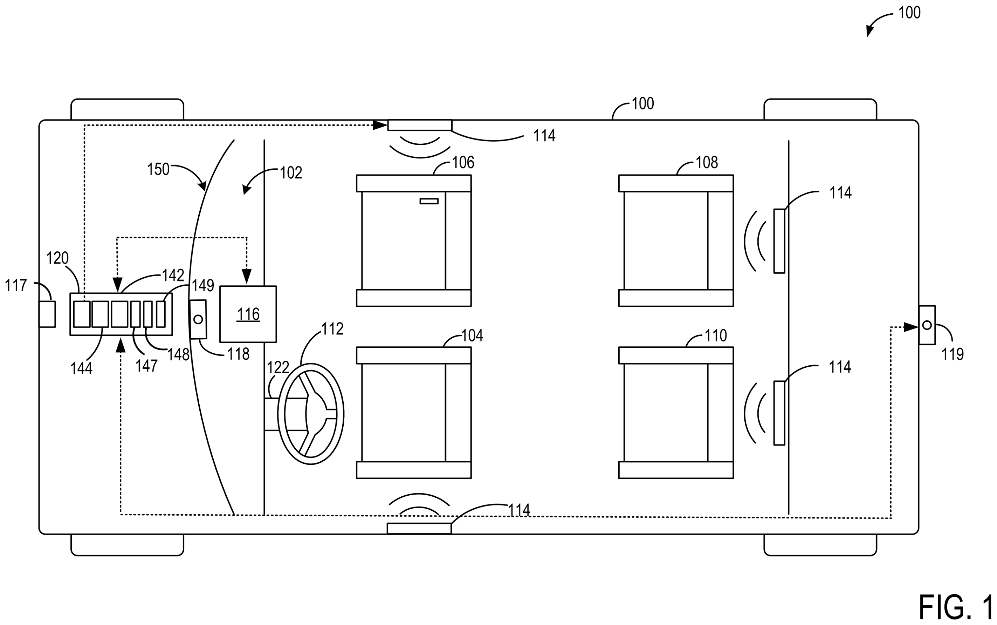

Turning now to the figures, FIG. 1 schematically shows an exemplary vehicle 100. The vehicle 100 includes a dashboard 102, a windshield 150, a driver seat 104, a first passenger seat 106, a second passenger seat 108, and a third passenger seat 110. In other examples, the vehicle 100 may include more or fewer passenger seats. The driver seat 104 and the first passenger seat 106 are located in a front of the vehicle, proximate to the dashboard 102, and therefore may be referred to as front seats. The second passenger seat 108 and the third passenger seat 110 are located at a rear of the vehicle and may be referred to as back (or rear) seats.

Additionally, the vehicle 100 includes a plurality of integrated speakers 114, which may be arranged around a periphery of the vehicle 100. In some embodiments, the integrated speakers 114 are electronically coupled to an electronic control system of the vehicle, such as to a computing system 120, via a wired connection. In other embodiments, the integrated speakers 114 may wirelessly communicate with the computing system 120. As an example, an audio file may be selected by an occupant of the vehicle 100, such as a driver passenger, via a user interface 116, and the selected audio file may be projected via the integrated speakers 114. In some examples, audio alerts may be generated by the computing system 120 and also may be projected by the integrated speakers 114.

The vehicle 100 includes a steering wheel 112 and a steering column 122, through which the driver may input steering commands for the vehicle 100. The vehicle 100 further includes one or more of camera 118. The camera 118 may be one camera of a plurality of cameras, which may include a forward-facing camera positioned to acquire images from a front environment of the vehicle 100, and a rear- or driver-facing camera positioned to acquire images from the cabin of the vehicle including the images of the driver. In the embodiment shown in FIG. 1, the camera 118 is positioned behind the windshield 150 and above the driver's line of sight seated in the driver seat 104. Additionally, in the embodiment shown in FIG. 1, a first exterior camera 117 is positioned on at a front end of vehicle 100, which may be a forward-facing camera configured to acquire images of a portion of a front environment of the vehicle 100, and a second exterior camera 119 is positioned on a back end of the vehicle 100, which may aid in monitoring the position of the vehicle 100 in a lane and/or monitor the position of the vehicle 100 relative to other vehicles and/or the surrounding environment, as some examples.

The cameras 117 and/or 118 may include an AR camera. The cameras 117 and/or 118 may include one or more optical (e.g., visible light) cameras, one or more infrared (IR) cameras, or a combination of optical and IR cameras having one or more view angles. In some examples, the camera 118 may have interior view angles as well as exterior view angles. In some examples, the cameras 117 and/or 118 may include more than one lens and more than one image sensor. For example, the camera 118 may include a first lens that directs light to a first, visible light image sensor (e.g., a charge-coupled device or a metal-oxide-semiconductor) and a second lens that directs light to a second, thermal imaging sensor (e.g., a focal plane array), enabling the camera 118 to collect light of different wavelength ranges for producing both visible and thermal images. In some examples, the cameras 117 and/or 118 may further include a depth camera and/or sensor, such as a time-of-flight camera or a LiDAR sensor.

In some examples, the cameras 117, 118, and/or 119 may include a digital camera configured to acquire a series of images (e.g., frames) at a programmable frequency (e.g., frame rate) and may be electronically and/or communicatively coupled to the computing system 120. Further, the cameras 117, 118, and/or 119 may output acquired images to the computing system 120 in real time so that they may be processed in real time by the computing system 120 and/or a computer network. As used herein, the term "real time" denotes a process that occurs without intentional delay (e.g., substantially at the time of occurrence).

The computing system 120 may receive inputs via the user interface 116 as well as output information to the user interface 116. The user interface 116 may be included in a digital cockpit, for example, and may include a display and one or more input devices. The one or more input devices may include one or more touchscreens, knobs, dials, hard buttons, and soft buttons for receiving user input from a vehicle occupant.

The computing system 120 includes a processor 142 configured to execute machine readable instructions stored in a memory 144. The processor 142 may be single core or multi-core, and the programs executed by processor 142 may be configured for parallel or distributed processing. In some embodiments, the processor 142 is a controller or microcontroller. The processor 142 may optionally include individual components that are distributed throughout two or more devices, which may be remotely located and/or configured for coordinated processing. In some embodiments, one or more aspects of the processor 142 may be virtualized and executed by remotely-accessible networked computing devices configured in a cloud computing configuration.

The computing system 120 may include a DMS 147, which may monitor a driver of the vehicle 100. The computing system 120 may include an OMS 148, which may monitor one or more passengers of the vehicle 100. The computing system 120 may include an ADAS 149, which may provide assistance to the driver based at least partially on the DMS 147. For example, ADAS 149 may receive camera data from the camera 118, and the ADAS 149 may process the camera data to provide the assistance to the driver. For example, the ADAS 149 may process the camera data to generate continuous images that are displayed to an operator of the vehicle via a plurality of reflective screens integrated within the windshield 150. The continuous images may enable to view a portion of the road concealed by a hood of the vehicle.

In various embodiments trained ML or DL depth estimation model may be integrated into the ADAS 149 that may continuously processes images received from the cameras 117, 118, and/or 119. For example, the trained ML or DL depth estimation model may utilize sensor and/or camera data from cameras 117 and/or 118 to display images continuously to reflective screens integrated within the windshield 150, for example. More particularly, the trained ML or DL depth estimation model may be trained to generate images of a portion of the road concealed by a hood of the car.

Additionally or alternatively, the computing system 120 may directly communicate with the networked computing devices via short-range communication protocols, such as Bluetooth^{®}. In some embodiments, the computing system 120 may include other electronic components capable of carrying out processing functions, such as a digital signal processor, a field-programmable gate array (FPGA), or a graphic board. In some embodiments, the processor 142 may include multiple electronic components capable of carrying out processing functions. For example, the processor 142 may include two or more electronic components selected from a plurality of possible electronic components, including a central processor, a digital signal processor, a field-programmable gate array, and a graphics board. In still further embodiments, the processor 142 may be configured as a graphical processing unit (GPU), including parallel computing architecture and parallel processing capabilities.

Further, the memory 144 may include any non-transitory tangible computer readable medium in which programming instructions are stored. As used herein, the term "tangible computer readable medium" is expressly defined to include any type of computer readable storage. The example methods described herein may be implemented using coded instruction (e.g., computer readable instructions) stored on a non-transitory computer readable medium such as a flash memory, a read-only memory (ROM), a random-access memory (RAM), a cache, or any other storage media in which information is stored for any duration (e.g. for extended period time periods, permanently, brief instances, for temporarily buffering, and/or for caching of the information).

Computer memory of computer readable storage mediums as referenced herein may include volatile and non-volatile or removable and non-removable media for a storage of electronically formatted information, such as computer readable program instructions or modules of computer readable program instructions, data, etc. that may be stand-alone or as part of a computing device. Examples of computer memory may include any other medium which can be used to store the desired electronic format of information and which can be accessed by the processor or processors or at least a portion of a computing device. In various embodiments, the memory 144 may include an SD memory card, an internal and/or external hard disk, USB memory device, or a similar modular memory.

Further still, in some examples, the computing system 120 may include a plurality of sub-systems or modules tasks with performing specific functions related to performing image acquisition and analysis. As used herein, the terms "system," "unit," or "module" may include a hardware and/or software system that operates to perform one or more functions. For example, a module, unit, or system may include a computer processor, controller, or other logic-based device that performs operations based on instructions stored on a tangible and non-transitory computer readable storage medium, such as a computer memory. Alternatively, a module, unit, or system may include a hard-wired device that performs operations based on hard-wired logic of the device. Various modules or units shown in the attached figures may represent the hardware that operates based on software or hardwired instructions, the software that directs hardware to perform the operations, or a combination thereof. For example, as will be elaborated herein, images received from the camera 117 and/or 118 may be input into a trained neural network model, which may be trained to continuously process the images and display images to at least four reflective screens integrated within the windshield 150.

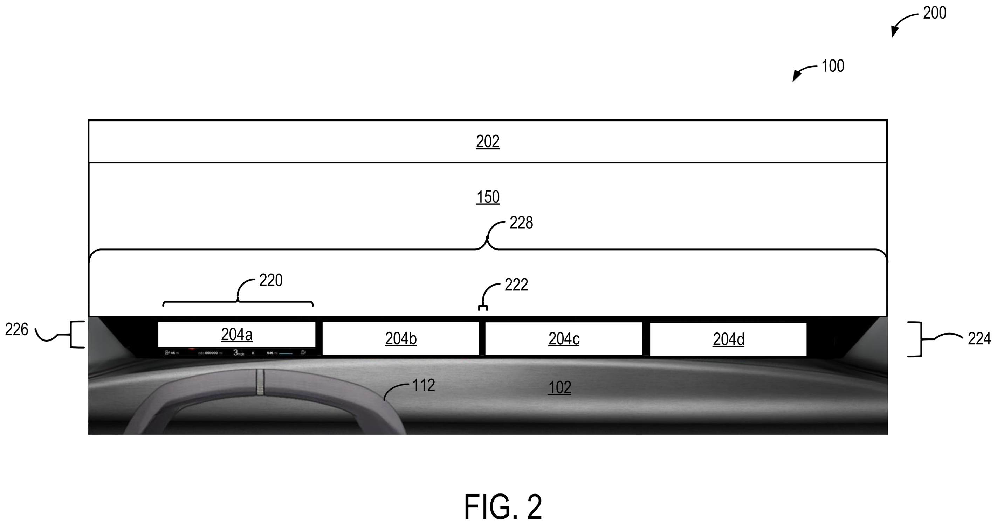

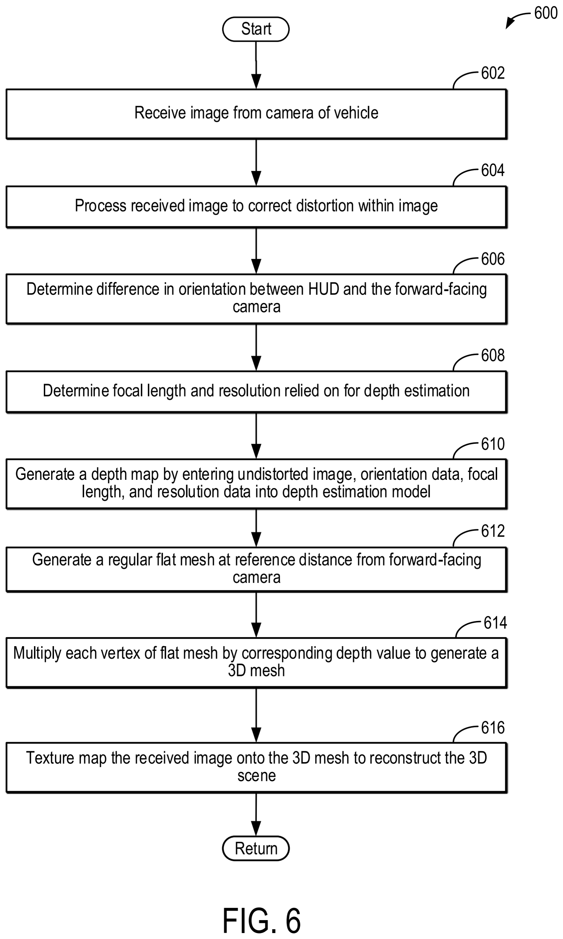

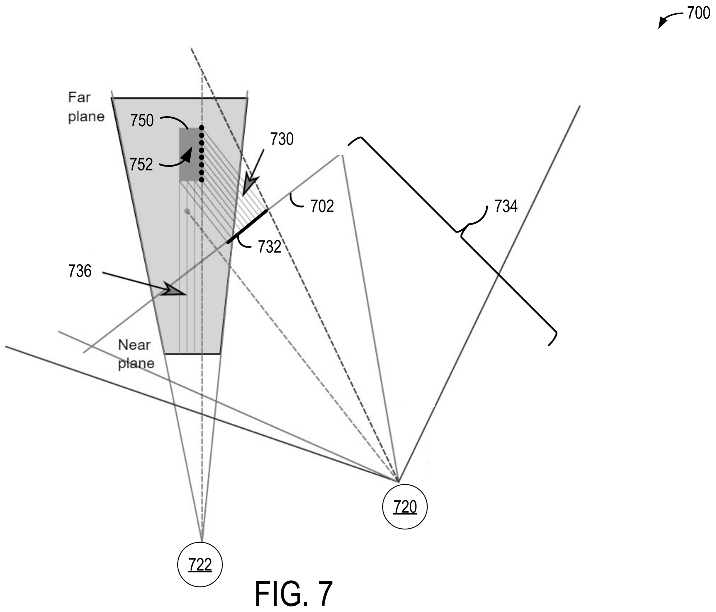

FIG. 2 illustrates a 2D-view 200 of windshield 150 from a point of view of a vehicle operator. The 2D-view 200 includes the dashboard 102, the steering wheel 112, an upper portion 202 of the vehicle system 100, a first reflective screen 204a, a second reflective screen 204b, a third reflective screen 204c, and a fourth reflective screen 204d. The first reflective screen 204a, the second reflective screen 204b, the third reflective screen 204c, and fourth reflective screen 204d display images of a portion of the road concealed by the hood the vehicle from different points of view. That is, the first reflective screen 204a may continuously display a first image from a first point of view; the second reflective screen 204b may continuously display a second image from a second point of view; the third reflective screen 204c may continuously display a third image from a third point of view; and the fourth reflective screen 204d may continuously display a fourth image from a fourth point of view. The first image from the first point of view, the second image from the second point of view, the third image from the third point of view, and the fourth image from the fourth point of view may be generated according to the methods described herein with respect to FIGS. 6 and 7.

Reflective screens 204a-204d may each have a width 220 and a height 224. In various examples, the width 220 and the height 224 may be the same for each of reflective screens 204a-204d. In other examples, one or more of reflective screens 204a-204d may have different widths 220 and/or heights 224. For example, a first reflective screen 204a may have a first height 226 that is shorter than a second height 224 of reflective screens 204b-204d, to allow space for dashboard controls of the driver to be visible. In some examples, reflective screens 204a-204d may be separated by a distance 222. Reflective screens 204a-204d may be configured to extend across most or all of a full width 228 of windshield 150. In other examples, reflective screens 204a-204d may be integrated into the dashboard 102. In some examples, the first, second, third, and fourth images may be projected on the reflective screens 204a-204d by projection devices included in dashboard 102, or at a different location.

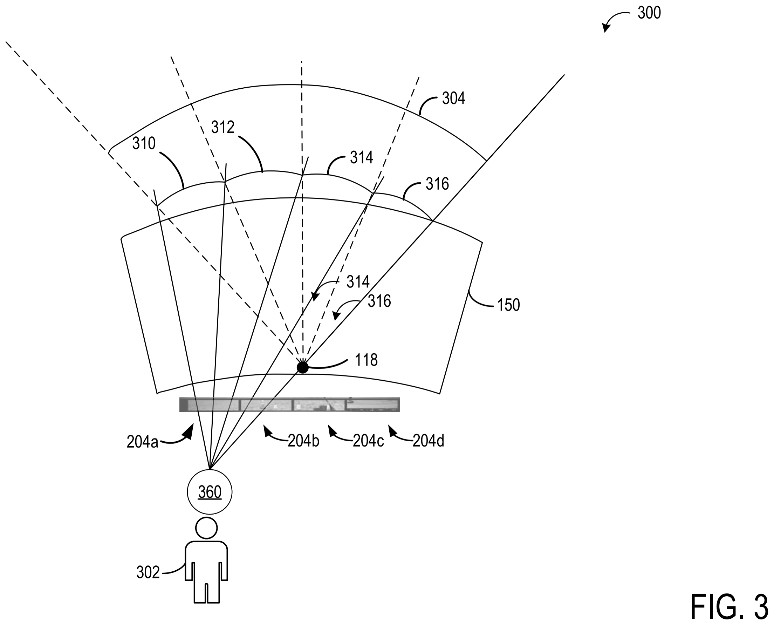

FIG. 3 illustrates a transparent hood system 300, which may be used in vehicle 100 described in FIG.1. The transparent hood system 300 includes the forward-facing camera 118 and the windshield 150 of FIG. 1, and the plurality of reflective screens described in reference to FIG. 2, including the first reflective screen 204a, the second reflective screen 204b, the third reflective screen 204c, and the fourth reflective screen 204d. The forward-facing camera 118 may continuously obtain a video feed of a path of the vehicle (e.g., a portion of road in front of the vehicle and/or a portion of an environment in front of the vehicle) during operation of the vehicle.

The forward-facing camera 118 may be positioned at a top and middle of windshield 150. The forward-facing camera 118 may capture images within a view angle 304. The view angle may be divided into a same number of component view angles as the number of reflective screens. That is, in the depicted example, the view angle 304 is divided into a first view angle component 310, a second view angle component 312, a third view angle component 314, and a fourth view angle 316. View angle components 310-316 may represent approximately equally sized portions of view angle 304.

Each view angle component may correspond to a portion of a front environment of the vehicle. For the purposes of this disclosure, the front environment includes an area in front of the vehicle at a level of a road or other surface on which the vehicle is operated that may be concealed or obstructed in a view of an operator 302 by a hood of the vehicle. That is, because the forward-facing camera 118 is positioned at the top of the windshield, above an eye level of the operator 302 and closer to the front of the vehicle, camera 118 may have a first angle relative to the front environment that is different from a second angle relative to the front environment corresponding to the view of the operator 302, which allows camera 118 to capture images of the concealed front environment that are not visible to the operator 302.

An image of the front environment captured by camera 118 at the view angle may include a first portion corresponding to the first view angle component 310, a second portion corresponding to the second view angle component 312, a third portion corresponding to the third view angle component 314, and a fourth portion corresponding to the fourth view angle 316. The first portion of the image may be displayed at first reflective screen 204a; the second portion of the image may be displayed at the second reflective screen 204b, the third portion of the image may be displayed at the third reflective screen 204c, and the fourth portion of the image may be displayed at fourth reflective screen 204d. However, prior to displaying the portions of the image at the reflective screens, each of the portions of the image may be translated from a first perspective view of the camera 118 (corresponding to the view angle 304) to a second perspective view 360 of the operator 302.

As described in greater detail below, when each portion of the image (e.g., video feed) is translated to a corresponding perspective view of the operator, a depth estimation of objects in portion of the image may be performed, and the captured images may be translated to the perspective view of the operator based on the depth estimation. Each image of the video feed may be processed using a depth estimation model, as described below in reference to the methods of FIGS. 6 and 7. More specifically, portions of the image may be selected and projected onto the plurality of reflective screens based on a corresponding depth of a respective portion outputted by the depth estimation model.

In some examples, the image may be alternatively generated from a camera positioned at a front end of the vehicle, such as an exterior camera positioned at a grill of the vehicle (e.g., camera 117 of FIG. 1). The image may be translated and displayed at one or more of first reflective screen 204a, the second reflective screen 204b, the third reflective screen 204c, and the fourth reflective screen 204d in a manner similar as described above.

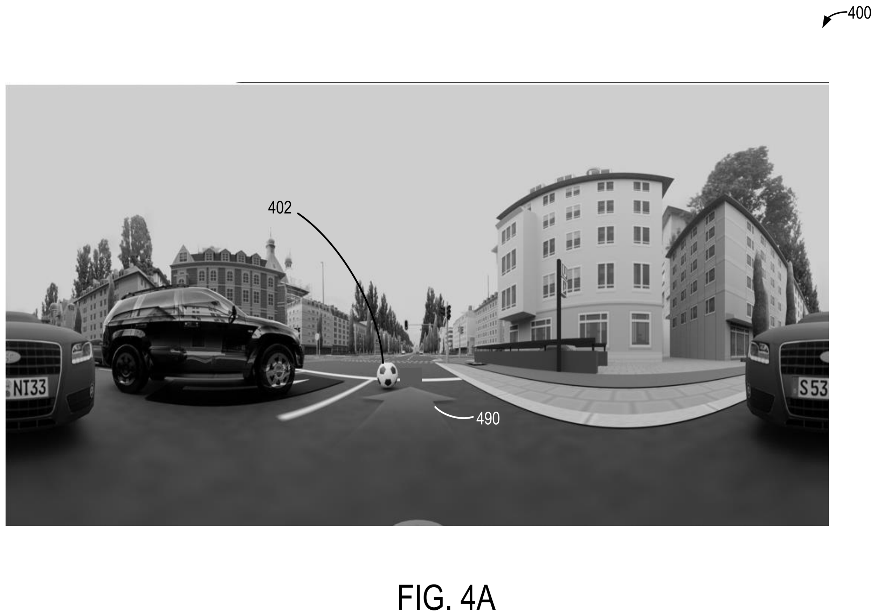

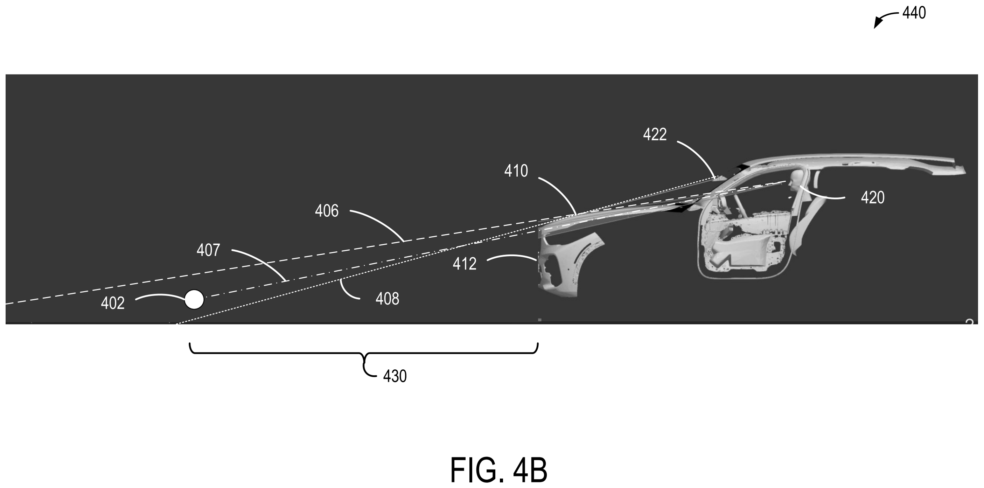

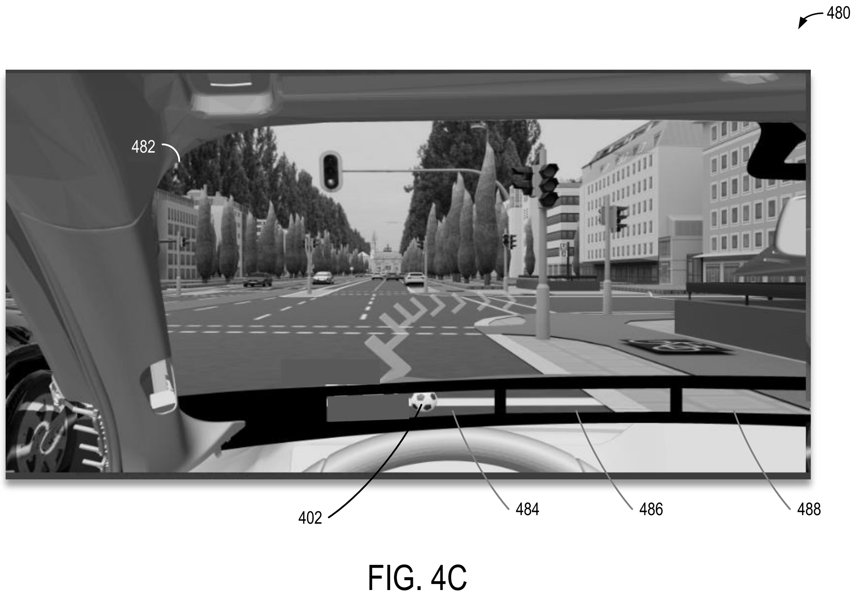

FIGS. 4A, 4B, and 4C illustrate how an object in a front environment of the vehicle may be viewed in one or more of the first reflective screen 204a, the second reflective screen 204b, the third reflective screen 204c, and the fourth reflective screen 204d, when the object is not visible to the operator. Referring to FIG. 4A, a view 400 of a street scene in front of a vehicle (not depicted in FIG. 4A) shows a ball 402 located in the vicinity of a path of the vehicle. View 400 is acquired at a level of the road, rather than at a level of a driver of the vehicle. The path of the vehicle is indicated by an arrow 490.

FIG. 4B shows a side view 440 of the vehicle, which is operated by a driver 420. Side view 440 shows a relative position of the ball 402 with respect to the vehicle. The ball 402 is positioned at a distance 430 from a front 412 of the vehicle. At the distance, the ball is too close to the vehicle to be seen by the driver 420, meaning that a first line of sight 406 of the driver 420 over a hood 410 of the vehicle is above the ball 402, such that the ball is obscured by the hood 410 in a direct line of sight 407 of the driver of the ball 402. However, the ball 402 is above a third line of sight 408 of a camera 422 (e.g., forward-facing camera 118 of FIGS. 1 and 2) over the hood 410. Therefore, the ball 402 may be captured in a video feed of camera 422.

FIG. 4C shows a perspective view 480 of the driver 420 through a windshield 482 of the vehicle (e.g., windshield 150). The ball 402 is not visible through the windshield 482, as it is obscured by the hood 410 (not shown in FIG. 4C. However, the ball 402 is visible in a first reflective screen 484, which may be a non-limiting example of first reflective screen 204a. That is, a portion of images continuously acquired of the ball 402 by the camera 422 including the ball 402 are translated to the perspective view of the driver 420 and displayed at the first reflective screen 484. The ball 402 is not visible in a second reflective screen 486 (e.g., second reflective screen 204b) or a third reflective screen 488 (e.g., third reflective screen 204c), because portions of images acquired by the camera 422 that are translated and displayed on the second reflective screen 486 and the third reflective screen 488 do not include the ball 402. That is, an image displayed in the first reflective screen 484 may display the ball 402 at a location on first reflective screen 484 that is along the direct line of sight 407 from the operator's eyes to the ball 402 through the hood of the vehicle. In other words, the ball 402 may be positioned in the display at a same location in the field of view of the driver as the ball 402 would be at if the hood 410 were transparent.

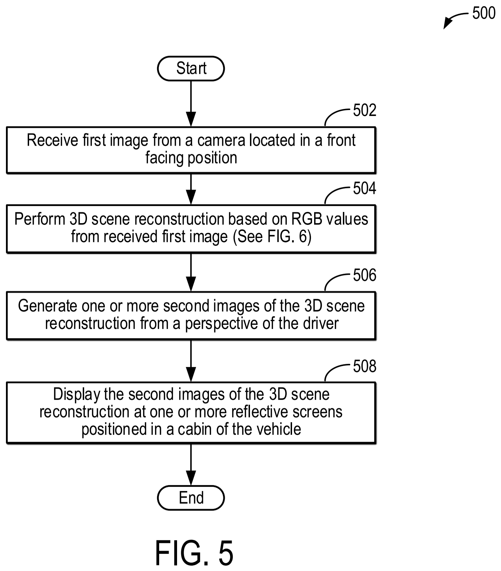

Turning now to FIG. 5, a method 500 is shown for generating images of portions of road concealed by a hood of a vehicle, such as vehicle system 100 of FIG. 1, based on images received from a forward-facing camera positioned in the vehicle. The forward-facing camera may be positioned behind a windshield of the vehicle and above a line of sight of a vehicle operator (e.g., camera 118 of FIG. 1), or may be positioned at an exterior front end of the vehicle (e.g., camera 117 of FIG. 1). The forward-facing camera may obtain images of an environment in front of the car near the ground, which may not be visible to the vehicle operator. The images may be displayed on one or more reflective screens positioned at a bottom edge of the windshield (e.g., first reflective screen 204a, second reflective screen 204b, third reflective screen 204c, and fourth reflective screen 204d of FIG. 2), or at a different location on the windshield. Since the camera may not be mounted in the vehicle at a same location as eyes of the vehicle operator, the captured images may not be displayed on the reflective screens in their captured state. Instead, the obtained images may be transformed to an appropriate point of view for a reflective screen a respective image is displayed on. In this way, the reflective screens may display content that is obstructed or concealed by the hood, the motor, and other parts of the vehicle that obstruct visibility of the vehicle operator. The steps of method 500 and other methods disclosed herein may be performed by a processor of a controller of the vehicle, such as processor 142 of FIG. 1, in accordance with instructions stored in a memory of the vehicle (e.g., memory 144). Method 500 may be performed repeatedly or continuously as images continue to be received in real time from the forward-facing camera.

At 502, method 500 includes receiving an acquired image from the forward-facing camera (e.g., located in a forward-facing position of a cabin of the vehicle). The camera may continuously obtain a video feed of a front environment of the vehicle during operation of the vehicle. Images of the video feed may be processed according to the subsequent steps of method 500. The received image may capture objects on the road that are not visible to the operator of the vehicle, such as a ball kicked in front of the vehicle, pot holes, objects that have fallen onto the road, parking barriers, traffic cones, and other obstacles positioned close to the front of the vehicle.

At 504, method 500 includes performing a 3D scene reconstruction based on RGB values of the received image. The 3D scene reconstruction may be performed using depth estimation combined with mesh generation. In particular, the depth estimation may be used to construct a mesh geometry onto which the RGB values are projected. Additionally or alternatively, the 3D scene reconstruction may be performed with scene knowledge (e.g., knowing the vehicle is driving on a flat road), a LiDAR-based scene reconstruction, or a reconstruction based on object detection via a different system of the vehicle. Other embodiments may utilize combinations of the reconstruction methods described. The 3D scene reconstruction enables the system to understand the spatial relationships between objects in the scene and their distances from the camera, which is demanded for accurate viewpoint transformation. The detailed steps for performing 3D scene reconstruction are described further with respect to FIG. 6.

At 506, method 500 includes generating an adjusted image of the 3D scene reconstruction for each reflective screen of a plurality of reflective screens positioned in a cabin of the vehicle, from a perspective of the driver, meaning, rendering the scene from the driver's eye position rather than from the camera position. The processing of the received image is performed independent of the mounting position of the camera, although certain camera positions may provide a more accurate 3D scene reconstruction than other positions of the camera. Generating the adjusted images includes applying both of a model-view matrix and a projection matrix to the 3D scene reconstruction.

A separate rendering setup may be configured for each reflective screen, with a different model-view matrix and a projection matrix for each respective reflective screen. The model-view matrix and a projection matrix for each reflective screen may be predefined and stored in a lookup table in the memory, and may be retrieved from the lookup table when the method is implemented. At each respective reflective screen, a respective model-view matrix may transform a first view of the 3D reconstruction in a first coordinate system of the forward-facing camera to a second view of the 3D reconstruction in a second coordinate system registered to a position of the driver's eyes, thereby accounting for a difference in position and orientation between the camera and the driver's eyes. The projection matrix may define, for a respective reflective screen, how the 3D scene is projected onto a two-dimensional surface of the respective reflective screen, with a view angle and field of view appropriate for the screen. Each reflective screen may display a different adjusted image of the same scene, based on the spatial relationship between the driver's eye position and the respective screen.

Generating the adjusted images of the 3D scene reconstruction from the perspective of the driver includes performing occlusion on 3D virtual objects within the field of view of the driver. Occlusion processing determines which objects in the scene are visible from the driver's eye position and which objects are hidden behind other objects. Performing the occlusion includes rendering the depth map to a depth buffer. The depth buffer stores updated depth values that are used during rendering to determine which objects are visible and which objects are occluded from the driver's viewpoint.

At 508, method 500 includes displaying the generated adjusted images of the 3D scene reconstruction at the one or more reflective screens, where the adjusted images are displayed in a perspective view of the driver. In other words, the scene may be rendered from the eye position of the vehicle operator rather than from a position of the camera. In various examples, the one or more reflective screens may be positioned at a bottom edge of the windshield, as described in reference to FIG. 2. The view may be displayed in a respective driver's eye point of view with appropriate model view and projection matrices.

For example, a first reflective screen (e.g., first reflective screen 204a) may continuously display a first image of the 3D reconstruction from a first point of view; a second reflective screen (e.g., second reflective screen 204b) may continuously display a second image of the 3D reconstruction from a second point of view; a third reflective screen (e.g., third reflective screen 204c) may continuously display a third image of the 3D reconstruction from a third point of view; and a fourth reflective screen (e.g., fourth reflective screen 204d) may continuously display a fourth image of the 3D reconstruction from a fourth point of view. The continuous projection of the first, second, third, and fourth images onto respective reflective screens creates a real-time transparent hood effect, enabling the operator to anticipate and achieve driving maneuvers based on the previously concealed portion of the road. For example, the operator may be able to see a ball kicked in front of the vehicle and maneuver around the ball to prevent an interaction between the ball and the vehicle.

Turning now to FIG. 6, a method 600 is shown for a controller of a vehicle for performing a 3D scene reconstruction of a front environment of a vehicle, based on images acquired from a forward or forward-facing camera of the vehicle (e.g., camera 117 or 118 of FIG. 1). In various examples, method 600 may be performed as part of method 500 described above in reference to FIG. 5.

At 602, method 600 includes receiving an image from the forward-facing camera. As described above, the camera may be positioned to capture images (e.g., a scene) of areas near the ground in front of the vehicle that are concealed from the driver by the hood. The camera may continuously obtain a video feed at a predefined framerate, and each image (e.g., frame) of the video feed may be processed according to the subsequent steps of method 600. The received image may include RGB values that are used for subsequent depth estimation processing.

At 604, method 600 includes processing the received image to correct distortion within the image. For example, the forward-facing camera may have a wide-angle lens that introduces distortion into captured images, such as pincushion or barrel distortion, for example. The distortion correction process may apply one or more algorithms to compensate for lens geometry and produce an undistorted image. The undistorted image may provide a more accurate representation of a scene captured by the forward-facing camera. The distortion correction process may utilize camera calibration parameters, including lens distortion coefficients, to transform the distorted image into the undistorted image. The undistorted image may maintain RGB values from the received image, while correcting for geometric distortions introduced by the camera lens.

At 606, method 600 includes determining a difference in orientation between a point of view of the driver (e.g., perspective view 360 of FIG. 3) and the forward-facing camera. The orientation of the forward-facing camera may differ from the orientation of the point of view of the driver due to mounting position differences within the vehicle. The difference in orientation is calculated to enable proper alignment of the depth map with the coordinate system of the point of view of the driver. The orientation difference may be expressed as angular offsets in pitch, yaw, and roll between the camera coordinate system and the coordinate system of the driver. Accounting for the orientation difference enables the system to properly transform the camera image into the coordinate system of the driver for subsequent processing and display. In various examples, the difference in orientation may be predefined for the vehicle and stored in a memory of the controller (e.g., memory 144 of FIG. 1), and determining the difference in orientation comprises retrieving the difference from the memory.

At 608, method 600 includes determining a focal length of the forward-facing camera, and a preferred resolution of the received image, which are accounted for in a depth estimation of elements of the received image. The focal length and resolution parameters may be selected based on properties of the forward-facing camera, a field of view relied on for the depth estimation, and/or computational resources available for processing. In various examples, the focal length and resolution may be predefined and retrieved from the memory.

At 610, method 600 includes generating a depth map by entering the undistorted image, orientation data, focal length, and resolution data into a depth estimation model. The depth estimation model may be a neural network trained to predict depth values from RGB values in the input image. The depth estimation model may take the undistorted image from step 604, the orientation data from step 606, the focal length from step 608, and the resolution data from step 608 as inputs. The depth estimation model may process these inputs and output a two-dimensional (2D) depth map. The depth map may include a 2D array of depth values in meters, where each depth map value is mapped to a pixel at a corresponding location in the undistorted image. Thus, the depth map may encode distances between the forward-facing camera and objects depicted in the undistorted image. The depth map may have a limited field of view corresponding to the area in front of the forward-facing camera position covering the depth estimation field of view.

The determined focal length and resolution parameters are used to configure the depth estimation model for optimal performance. The depth estimation model may rely on the undistorted image having a desired or preferred resolution, such as 512 × 288 pixels, which may differ from the resolution of the received image. In such cases, the resolution of the undistorted image may be adjusted. The focal length parameter affects the scale and perspective of the depth estimation.

At 612, method 600 includes generating a regular, flat mesh positioned at a reference distance in front of the forward-facing camera position in forward-facing camera coordinates. The reference distance may be at a 0.1-meter distance, 1-meter distance, or a 10-meter distance covering the depth estimation field of view.

At 614, method 600 includes multiplying each vertex of the regular, flat mesh by a corresponding depth value obtained from the depth estimation to generate a 3D mesh. The depth value may be expressed in meters. The vertices are defined in the coordinate system of the forward-facing camera, which serves as the reference frame for an initial 3D reconstruction. This multiplication transforms the flat mesh into a 3D representation of a geometry of the scene.

At 616, method 600 includes texture mapping the undistorted image onto the 3D mesh to reconstruct the 3D scene. The 3D mesh provides a geometric structure onto which the undistorted image is mapped as a texture. The texture mapping process applies the RGB values from the received image onto the 3D mesh, creating a textured 3D representation of the scene. The resulting textured 3D mesh accurately represents the spatial structure of the scene as captured by the forward-facing camera, including objects such as balls, traffic cones, parking barriers, and road surfaces that are concealed by the hood of the vehicle.

FIG. 7 shows a diagram 700 that illustrates pictorially how an image captured from the forward-facing camera may be translated to a perspective view of the driver. Diagram 700 includes a first field of view 702 of a forward-facing camera 720 (e.g., camera 118), which intersects with a second field of view 722 of a driver (e.g., eyes of the driver) of a vehicle such as vehicle 100 of FIG. 1. An object 750 is in both the first field of view 702 and the second field of view 722. Forward-facing camera 720 acquires an image of object 750, comprising a plurality of pixels 752. A depth value 730 of each pixel 752 from a perspective of forward-facing camera 720 is first estimated using the depth estimation model, as described in reference to method 600 of FIG. 6. A 2D mesh 732 may then be generated at a reference distance 734 from forward-facing camera 720. Each vertex of mesh 732 is then multiplied by a depth value 730 of a corresponding pixel 752 to generate a 3D mesh representation of the scene, including object 750. The 3D mesh is texture mapped using the image. A second image of object 750 is then generated of the texture-mapped 3D mesh from the second field of view 722, with translated Z-buffer values 736 representing the depths of pixels of the second image from the perspective of the driver.

The technical effect of performing 3D scene reconstruction based on depth estimation and generating driver-specific views for each reflective screen is that the system accurately represents the spatial structure of the scene as captured by the forward-facing camera, while accounting for the difference in position between the camera and the operator's eyes.

The disclosure also provides support for a method for a controller of a vehicle, the method comprising: receiving an image acquired from a forward-facing camera of the vehicle of a portion of a front environment of the vehicle that is obscured from an operator of the vehicle by a hood of the vehicle, performing a three-dimensional (3D) scene reconstruction of the portion of the front environment, based on the received image, and displaying one or more adjusted images of the 3D scene reconstruction at one or more respective reflective screens positioned in a cabin of the vehicle, wherein the displayed adjusted images are translated from a first point of view of the forward-facing camera to a second point of view of the operator. In a first example of the method, the adjusted images are displayed such that an object positioned in the portion of the front environment appears in at a location on a respective reflective screen that is along a direct line of sight from eyes of the operator to the object through the hood of the vehicle. In a second example of the method, optionally including the first example, the one or more respective reflective screens are integrated into a bottom edge of a windshield of the vehicle. In a third example of the method, optionally including one or both of the first and second examples, the one or more respective reflective screens are integrated into a dashboard of the vehicle. In a fourth example of the method, optionally including one or more or each of the first through third examples, the forward-facing camera is positioned inside the cabin of the vehicle at a middle and top of the windshield. In a fifth example of the method, optionally including one or more or each of the first through fourth examples, the forward-facing camera is positioned at a grill of a front end of the vehicle. In a sixth example of the method, optionally including one or more or each of the first through fifth examples, performing the 3D scene reconstruction of the portion of the front environment of the vehicle further comprises determining a difference in orientation between a first perspective view of the forward-facing camera and a second perspective view of the operator. In a seventh example of the method, optionally including one or more or each of the first through sixth examples, performing the 3D scene reconstruction of the portion of the front environment of the vehicle further comprises: predicting depth values of pixels of the received image based on RGB values of the pixels, using a depth estimation model, generating a regular, flat mesh positioned at a reference distance in front of the forward-facing camera, multiplying each vertex of the regular, flat mesh in coordinates of the forward-facing camera by a corresponding depth value, to generate a 3D mesh, and texture-mapping the image onto the 3D mesh. In a eighth example of the method, optionally including one or more or each of the first through seventh examples, the depth estimation model is neural network that takes as input the received image, the difference in orientation between the first perspective view of the forward-facing camera and the second perspective view of the operator, a focal length of the forward-facing camera, and a preferred resolution of the received image, and outputs a depth map including the predicted depth values. In a ninth example of the method, optionally including one or more or each of the first through eighth examples, the method further comprises: for each respective reflective screen: retrieving a model-view matrix and a projection matrix from a memory of the controller, translating the texture-mapped 3D mesh from a first coordinate system of the forward-facing camera to a second coordinate system registered to a position of the operator, using the model-view matrix, determining a view angle and field of view of the portion of the front environment appropriate for the respective reflective screen, using the projection matrix, and displaying an adjusted image of the translated 3D mesh onto a 2D surface of the respective reflective screen, with the view angle and field of view.

The disclosure also provides support for a system of a vehicle, the system comprising: a forward-facing camera positioned to acquire a video feed of a portion of a front environment of the vehicle that is obscured from an operator of the vehicle by a hood of the vehicle, one or more reflective screens integrated into a windshield or a dashboard of the vehicle, a processor, and a memory storing instructions that when executed by the processor, cause the processor to: receive an image from the forward-facing camera, perform a three-dimensional (3D) scene reconstruction of the portion of the front environment, based on the received image, and display one or more adjusted images of the 3D scene reconstruction at the one or more reflective screens, the adjusted images translated from a first perspective view of the forward-facing camera to a second perspective view of the operator. In a first example of the system, the forward-facing camera is positioned either inside a cabin of the vehicle at a top of the windshield or at a grill of a front end of the vehicle. In a second example of the system, optionally including the first example, the one or more reflective screens are configured to extend across most of or all of a full width of the windshield. In a third example of the system, optionally including one or both of the first and second examples, the one or more reflective screens includes four reflective screens. In a fourth example of the system, optionally including one or more or each of the first through third examples, further instructions are stored in the memory that when executed, cause the processor to: generate a depth map of the received image based on RGB values of pixels of the received image, using a depth estimation model, the depth map a two-dimensional (2D) array of estimated depth values of pixels of the received image, generate a regular, flat mesh in coordinates of the forward-facing camera at a reference distance in front of the forward-facing camera, multiply each vertex of the regular, flat mesh by a depth value of a corresponding pixel of the depth map, to generate a 3D mesh, and texture-map the received image onto the 3D mesh, and for each reflective screen: retrieve a model-view matrix and a projection matrix from the memory, translate the texture-mapped 3D mesh from a first coordinate system of the forward-facing camera to a second coordinate system of a position of the operator's eyes, using the model-view matrix, determine a view angle and field of view appropriate for the reflective screen, using the projection matrix, and display an adjusted image of the translated 3D mesh onto a 2D surface of the reflective screen, with the view angle and field of view. In a fifth example of the system, optionally including one or more or each of the first through fourth examples, further instructions are stored in the memory that when executed, cause the processor to apply one or more algorithms to the received image to compensate for a lens geometry of the forward-facing camera and produce an undistorted image. In a sixth example of the system, optionally including one or more or each of the first through fifth examples, the depth estimation model is a neural network takes as input the undistorted image, a difference in orientation between the first perspective view of the forward-facing camera and the second perspective view of the operator, and a focal length of the forward-facing camera, and a preferred resolution of the undistorted image, and outputs the depth map.

The disclosure also provides support for a method for generating images of a portion of a front environment of a vehicle, the method comprising: receiving an image of the portion of a front environment from a forward-facing camera of the vehicle, processing the image to correct a distortion of the image, determining a difference in orientation between a first perspective view of the forward-facing camera and a second perspective view of a driver of the vehicle, retrieving a focal length of the forward-facing camera and a preferred resolution of the image from a memory of the vehicle, generate a depth map of the received image based on RGB values of pixels of the received image, using a depth estimation model, the depth map a two-dimensional (2D) array of estimated depth values of pixels of the received image, generating a regular flat mesh at a reference distance from the forward-facing camera, multiplying each vertex of the flat mesh by a corresponding depth value to generate a three-dimensional (3D) mesh, texture mapping the received image onto the 3D mesh to reconstruct a 3D scene of the portion of the front environment, generating a first image of the 3D scene from the first perspective of the forward-facing camera, translating the first image to second image having the second perspective of the driver of the vehicle, and displaying the second image at a reflective screens positioned in a cabin of the vehicle. In a first example of the method, the portion of the front environment of the vehicle is obscured from a view of the driver by a hood of the vehicle. In a second example of the method, optionally including the first example, the forward-facing camera is positioned at a top of a windshield of the vehicle.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the embodiments described above with respect to FIGS. 1-8. The methods may be performed by executing stored instructions with one or more logic devices (e.g., processors) in combination with one or more hardware elements, such as storage devices, memory, hardware network interfaces/antennas, switches, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," "third," and so on are used merely as labels and are not intended to impose numerical requirements or a particular positional order on their objects unless explicitly stated to the contrary.

The following claims particularly point out subject matter from the above disclosure that is regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A method for a controller of a vehicle, the method comprising:
receiving an image acquired from a forward-facing camera of the vehicle of a portion of a front environment of the vehicle that is obscured from an operator of the vehicle by a hood of the vehicle;
performing a three-dimensional, 3D, scene reconstruction of the portion of the front environment, based on the received image; and
displaying one or more adjusted images of the 3D scene reconstruction at one or more respective reflective screens positioned in a cabin of the vehicle;
wherein the displayed adjusted images are translated from a first point of view of the forward-facing camera to a second point of view of the operator.

2. The method of claim 1, wherein the adjusted images are displayed such that an object positioned in the portion of the front environment appears in at a location on a respective reflective screen that is along a direct line of sight from eyes of the operator to the object through the hood of the vehicle.

3. The method of claim 1 or 2, wherein the one or more respective reflective screens are integrated into a bottom edge of a windshield of the vehicle.

4. The method of any preceding claim, wherein the one or more respective reflective screens are integrated into a dashboard of the vehicle, and preferably the forward-facing camera is positioned inside the cabin of the vehicle at a middle and top of the windshield.

5. The method of any preceding claim, wherein the forward-facing camera is positioned at a grill of a front end of the vehicle.

6. The method of any preceding claim, wherein performing the 3D scene reconstruction of the portion of the front environment of the vehicle further comprises determining a difference in orientation between a first perspective view of the forward-facing camera and a second perspective view of the operator.

7. The method of claim 6, wherein performing the 3D scene reconstruction of the portion of the front environment of the vehicle further comprises:
predicting depth values of pixels of the received image based on RGB values of the pixels, using a depth estimation model;
generating a regular, flat mesh positioned at a reference distance in front of the forward-facing camera;
multiplying each vertex of the regular, flat mesh in coordinates of the forward-facing camera by a corresponding depth value, to generate a 3D mesh; and
texture-mapping the image onto the 3D mesh.

8. The method of claim 7, wherein the depth estimation model is neural network that takes as input the received image, the difference in orientation between the first perspective view of the forward-facing camera and the second perspective view of the operator, a focal length of the forward-facing camera, and a preferred resolution of the received image, and outputs a depth map including the predicted depth values.

9. The method of claim 7 or 8, further comprising:
for each respective reflective screen:
retrieving a model-view matrix and a projection matrix from a memory of the controller;
translating the texture-mapped 3D mesh from a first coordinate system of the forward-facing camera to a second coordinate system registered to a position of the operator, using the model-view matrix;
determining a view angle and field of view of the portion of the front environment appropriate for the respective reflective screen, using the projection matrix; and
displaying an adjusted image of the translated 3D mesh onto a 2D surface of the respective reflective screen, with the view angle and field of view.

10. A system of a vehicle, the system comprising:
a forward-facing camera positioned to acquire a video feed of a portion of a front environment of the vehicle that is obscured from an operator of the vehicle by a hood of the vehicle;
one or more reflective screens integrated into a windshield or a dashboard of the vehicle;
a processor, and a memory storing instructions that when executed by the processor, cause the processor to:
receive an image from the forward-facing camera;
perform a three-dimensional (3D) scene reconstruction of the portion of the front environment, based on the received image; and
display one or more adjusted images of the 3D scene reconstruction at the one or more reflective screens, the adjusted images translated from a first perspective view of the forward-facing camera to a second perspective view of the operator.

11. The system of claim 10, wherein the forward-facing camera is positioned either inside a cabin of the vehicle at a top of the windshield or at a grill of a front end of the vehicle.

12. The system of claim 10 or 11, wherein the one or more reflective screens
- are configured to extend across most of or all of a full width of the windshield and/or
- include four reflective screens.

13. The system of any of claims 10 to 12, wherein further instructions are stored in the memory that when executed, cause the processor to:
generate a depth map of the received image based on RGB values of pixels of the received image, using a depth estimation model, the depth map a two-dimensional (2D) array of estimated depth values of pixels of the received image;
generate a regular, flat mesh in coordinates of the forward-facing camera at a reference distance in front of the forward-facing camera;
multiply each vertex of the regular, flat mesh by a depth value of a corresponding pixel of the depth map, to generate a 3D mesh; and
texture-map the received image onto the 3D mesh; and
for each reflective screen:
retrieve a model-view matrix and a projection matrix from the memory;
translate the texture-mapped 3D mesh from a first coordinate system of the forward-facing camera to a second coordinate system of a position of the operator's eyes, using the model-view matrix;
determine a view angle and field of view appropriate for the reflective screen, using the projection matrix; and
display an adjusted image of the translated 3D mesh onto a 2D surface of the reflective screen, with the view angle and field of view.

14. The system of claim 13, wherein further instructions are stored in the memory that when executed, cause the processor to apply one or more algorithms to the received image to compensate for a lens geometry of the forward-facing camera and produce an undistorted image.

15. The system of claim 14, wherein the depth estimation model is a neural network takes as input the undistorted image, a difference in orientation between the first perspective view of the forward-facing camera and the second perspective view of the operator, and a focal length of the forward-facing camera, and a preferred resolution of the undistorted image, and outputs the depth map.
